# EUROPEAN PATENT APPLICATION

(11) **EP 3 617 155 A1**
(43) Date of publication of application: **04.03.2020**
(21) Application number: 19192674.0
(22) Date of filing: 20.08.2019
(51) Int. Cl.: C02F 1/00, E03F 5/04, C02F 11/121, B01D 29/27, C02F 103/00, C02F 1/40, E03F 5/14, C02F 103/06

(54) **A DEWATERING UNIT**

(30) Priority: 31.08.2018 GB 201814201; 11.06.2019 GB 201908331
(71) Applicant: Forest Drainage Products Limited, Newent Gloucestershire GL18 1LG (GB)
(72) Inventor: Boon, Julie Ann, Ashlleworth, Gloucestershire GL19 4HT (GB)
(74) Representative: Wynne-Jones IP Limited

(57) **Abstract**

A dewatering unit for filtering waste water from slurries or suspensions, comprising: a container defining an internal volume, and a partition dividing the internal volume into a first compartment and a second compartment; wherein the first compartment includes an opening for introducing a slurry to be filtered; the partition, in use, allows slurry to pass from the first compartment to the second compartment while retaining solids above a predetermined size in the first compartment; the second compartment comprises a drainage opening for allowing liquid to flow from the container, and defines a housing for a filter, such that in use, when a filter is disposed in the housing, slurry flowing through the partition into the second container flows through the filter before reaching the drainage opening; wherein the container can be positioned for use above ground at an operation location, and can be moved to another location for further use. A method of operating a dewatering unit, comprises: positioning the container at ground level at an operation location with a filter in the second compartment; introducing slurry/suspension into the first compartment; allowing the slurry/suspension to pass through the partition such that solids above a predetermined size are retained in the first compartment; filtering the slurry through the filter in the second compartment; and allowing filtered water to pass from the container through the outlet.

## Description

### Technical Field

The present invention relates to a de-watering unit for filtering the waste water from suspensions/slurries.

### Background Art

The Environmental Permitting (England and Wales) Regulations 2010 and Water Resources Act 1991 dictate that it is an offense to discharge polluting substances to controlled waters without prior approval from appropriate bodies. There are strict controls relating to the storage and treatment of waste from processes such as road sweeping, gully sucking, ground/trench dewatering operations, or transport/machinery wash water. Failure to comply with these measures can cause pollutants to be released into the environment, potentially polluting groundwater and aquatic environments. GB 2472690 A (FOREST DRAINAGE PRODUCTS LIMITED) 16/02/2011 and US 20020130083 A (MIDDLETON ETAL) 19/09/2002 disclose replaceable filters for use in road gullies.

Existing disposal of waste from such operations normally comprises transporting slurry away from the site of collection to a treatment location. Water is removed from the slurry (de-watering), cleaned and disposed of, and the remaining solid waste is subsequently disposed of in an environmentally sensitive way. Some existing processes that require treatment of the suspensions/slurries on site, such as concrete machinery washdown, include treatment with acids or CO₂ to balance the pH of the wash water. However, most of these only work for very liquid wash water that does not include a large amount of sediment.

There is therefore a need for a method of filtering and treating suspensions and slurries collected from road sweeping, gully sucking operations and the like, that can be carried out on site whilst ensuring that any waste water is disposed of in an environmentally sensitive manner. There is also a desire to reduce the amount of substance that is required to be transported offsite such that the overall process efficiency can be improved.

Embodiments of the present invention are intended to address at least some of the aforementioned problems.

### Summary

One aspect of the present invention provides a dewatering unit for filtering waste water from slurries or suspensions, comprising:
- a container defining an internal volume, and a partition dividing the internal volume into a first compartment and a second compartment;
- wherein
   - the first compartment includes an opening for introducing a slurry to be filtered;
   - the partition, in use, allows slurry to pass from the first compartment to the second compartment while retaining solids above a predetermined size in the first compartment;
   - the second compartment comprises a drainage opening for allowing liquid to flow from the container, and defines a housing for a filter, such that in use, when a filter is disposed in the housing, slurry flowing through the partition into the second container flows through the filter before reaching the drainage opening;
- wherein the container can be positioned for use above ground at an operation location, and can be moved to another location for further use.

At least the first compartment can be open-topped to allow slurry to be introduced (e.g. pumped) into the container. The drainage opening located at one end of the container, at or near the bottom of the second compartment. Thus, in use, the filter separates the drainage opening from the remainder of the container. In use, a slurry or suspension deposited into the first container and drains, under gravity, through the partition so that larger solids are retained in the first compartment, and through the filter to the drainage opening. The drainage opening can include a valve or other closure to control flow from the container.

Alternatively, the container comprises an enclosed housing and has an inlet located in one side at or near a lower end for introduction of the slurry, and the drainage opening is located in an opposite side, at or adjacent an upper end. The partition divides the enclosed housing into a lower, first compartment and an upper, second compartment. The partition are located within the housing between the first and second sides, as is the filter, when installed. In use, the slurry/suspension can be pumped into the housing via the lower inlet. The force of the pumping action causes the slurry to travel upwards through the partition and then the filter to the upper drainage opening, the larger solids being retained in the first compartment and the filter removing other solids. At the opening, the cleaned waste water can drain out of the unit under gravity. A further outlet can be provided in the lower first compartment to allow any retained solids to be removed.

Alternatively, the enclosed housing has an inlet located in one side at or near an upper end for introduction of the slurry, and the drainage opening is located in an opposite side, at or adjacent a lower end. The partition divides the enclosed housing into an upper, first compartment and a lower, second compartment. In use, slurry/suspension is pumped or otherwise introduced into the housing via the inlet. The force of a pumping action and/or gravity causes the slurry to travel downwards through the partition where larger solids are retained, and then through the filter, to the drainage opening. At the opening, the cleaned waste water can drain out of the unit under gravity.

The filter can comprises at least one porous bag or cartridge holding filter members in the form of a geosynthetic aggregate. The filter members of the dewatering unit can comprise geosynthetic aggregate resistant to dilute inorganic acids, gypsum plaster, alcohols, Portland cement, silicone oil and solvent-free bitumen, such that any such contaminants in the slurry water are captured on their surface as the liquid flows through the filter. The filter members can comprise plastic beads or expanded polystyrene beads or hollow plastic members, e.g. balls. The filter can comprise a porous bag, for example, a fabric or net bag, which is sealed for use. Alternatively, the filter can comprise a cartridge having a rigid or flexible porous outer wall, which may be of any suitable shape or size.

The filter of the dewatering unit can be removable and replaceable for maintenance or cleaning purposes. The porous bag or cartridge containing the filter members can simply be washed (to remove captured sediment and contaminants therefrom) and then replaced.

The container can include an access opening for the second compartment opening to allow the filter to be inserted or removed. This allows the filters to be changed without the need to deal with the larger retained solids, which can remain in the first compartment. The second compartment can also include a retainer for compressing the filter so as to fully fill the flow path to the drainage opening.

The partition can comprise a perforated plate, or a mesh plate, in either case formed of any suitable material, e.g. plastic or metal. In use, the partition separates the first and second compartments such that the liquid self-drains through the unit, passing through the partition to the filter where debris is caught on the surface of the partition proximal to the container, and then to the drainage opening. The unit is configured such that the solid (larger) particles remain in the first compartment, e.g. in a semi-dry state.

The container may additionally comprise an input pipe for receiving a high pressure flow of slurry. The filter cleans the remaining slurry/suspension, capturing sediment and, more importantly, chemical contaminants, on the outer surface of the beads, such that the waste water draining from the drainage opening is sufficiently clean to be disposed of via public drainage systems, water courses or networks.

The partition captures larger particles from the slurry/suspension liquid, then the outer material of the filter cartridge or bag filters smaller particles and sediment that has passed through the partition. The filter members or beads then capture any remaining smaller particles and contaminants such as dilute hydrocarbons, oils, fuels, solute fats and greases, phosphates, nitrates, heavy metals, sediment and particulates. The filter members may beneficially comprise expanded polystyrene beads or similar plastic beads, which may be considered collectively as geosynthetic aggregates. The filter cartridges or bags are removable so that they can be replaced, if necessary, or simply washed and returned to the unit.

The water passing through the drainage opening has been filtered and can therefore be safe enough to be disposed of on site, mitigating risk to the environment into which it enters. The remaining (semi-dry) solids are retained in the container which can be transported to a suitable site for removal and disposal of the solids. The removal of most of the water content of the waste gives a reduction in weight and volume of the waste to be transported away from the site for disposal. This system therefore improves the operational efficiency of the process of removal of such slurries, whilst improving the environmental impact of the waste water that is ejected from the system in surrounding water systems.

A method of operating the dewatering unit comprises:
- positioning the container at ground level at an operation location with a filter in the second compartment;
- introducing slurry/suspension into the first compartment;
- allowing the slurry/suspension to pass through the partition such that solids above a predetermined size are retained in the first compartment;
- filtering the slurry through the filter in the second compartment; and
- allowing filtered water to pass from the container through the outlet.

The method can further comprise removing the filters for cleaning and inserting new filters or cleaned filters and resuming operation.

When operations are completed, or when the first compartment is full of retained solids, the unit can be moved from the operation location to another location at which the retained solids can be removed, cleaned and disposed of in a suitable manner. The unit can be cleaned and/or reconditioned and returned to service at the same or a different operation location.

### Brief Description of the Drawings

Figure 1 is a section view of an open-topped dewatering unit;
Figure 2 is a detailed view of part of the unit shown in Figure 1;
Figure 3 is a section view of an enclosed dewatering unit;
Figure 4 is a section view of another enclosed dewatering unit. Description of Embodiments

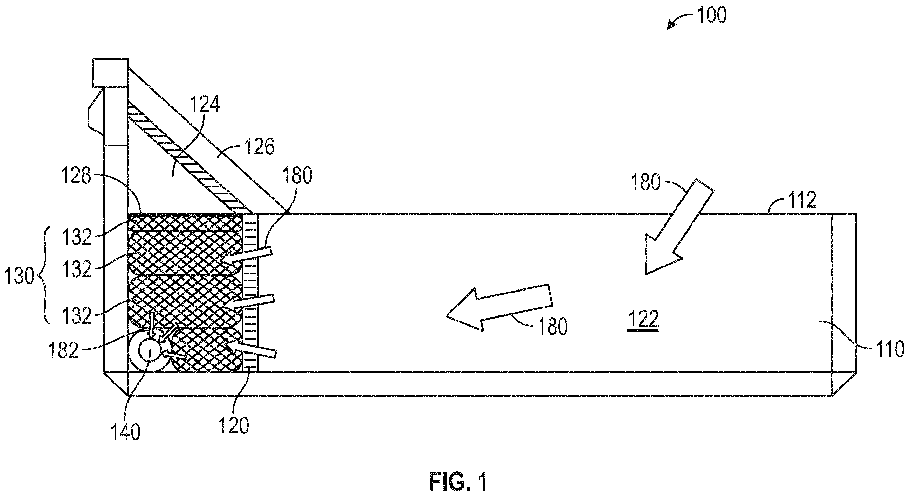

**Figure 1** shows a large dewatering unit 100 comprising a gravity dependant 'drain-down' set-up. The container 110 comprises an metal, box-like structure which can be loaded onto or unloaded from a transporting vehicle (not shown) for movement between locations.

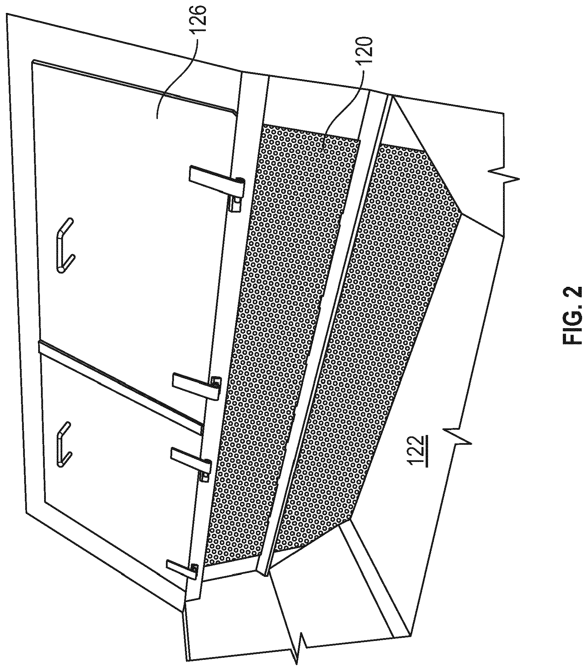

The inside of the container 11 is divided by a partition 120 into first and second compartments 122, 124. The partition 120 is shown in more detail in **Figure 2** and comprises a mesh or perforated plate to prevent large particles (e.g. > 1cm diameter) from passing through.

The first compartment 122 forms the major part of the container 110 and has an open-top 112, such that the slurry/suspension can be easily pumped or poured into the container 110. The partition 120 is disposed between the first compartment 122 and the second compartment 124 which contains a filter 130.

The filter 130 comprises one or more porous (e.g. net or mesh) bags 132 holding a plurality of filter beads in the form of geosynthetic aggregate. The bag is sealed for use. The second compartment 124 has hatches 126 through which the filter bags 132 can be loaded into, or removed from the second compartment 124. A retaining grid 128 is located within the second compartment and serves to compress the filter bags 132 so that slurry cannot flow around the bags 132 but must pass through them and be filtered before leaving the second compartment 124.

As the first compartment 122 fills up, the slurry/suspension flows towards and through the partition 120 (flow path 180). As the slurry/suspension flows through the partition 120, larger particles are prevented from passing through the partition 120 and remain in the first compartment 122. The remaining slurry/suspension liquid then passes through the filter 130. The filter is disposed between the partition 120 and a drainage opening 140 located at the bottom of the second compartment 124 on the opposite side from the partition 120. As previously explained, the filter 130 comprises filter beads (not shown) inside a filter cartridge or bag 132. The liquid flows through the outside material of the cartridges and between the filter beads, which remove smaller sediment particles and chemical contaminants. The resulting liquid then self-drains (flow path 182) through the drainage opening 140 where it can be disposed of into the environment or, for example, into public drainage systems. A large unit 100 of the type shown in **Figure 1** is more suitable for heavier sedimentation and slurries, as the weight of the slurry forces it through the partition and filter. The slurry can simply be deposited into the container from the open top 112, and the water will drain downwards and out of the drainage opening 140 under gravity. A screen or other splashback means may be provided at one or more of the sides of the container.

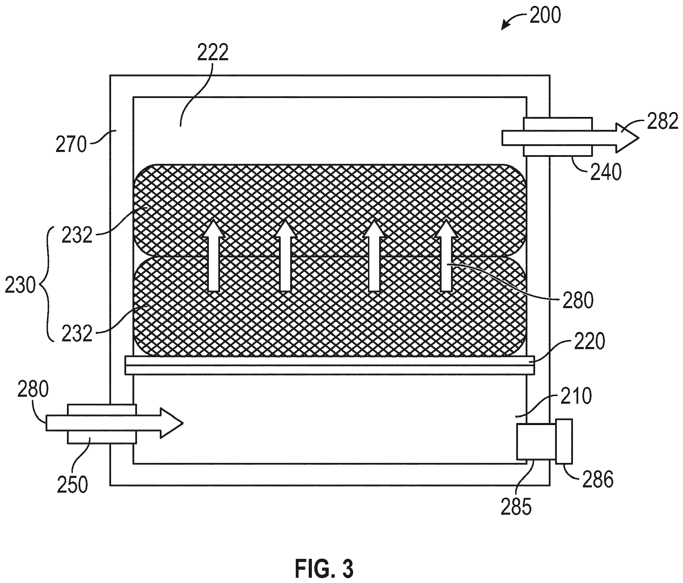

**Figure 3** depicts a smaller dewatering unit 200 comprising an upwards percolation set-up. The unit 200 comprises an enclosed housing 270 with a partition 220 extending across the unit to define a first compartment 210 at the bottom and a second compartment 222 at the top.

An inlet pipe 250 feeds into the bottom of the first compartment 210, and a drainage opening 240 provides an outlet pipe at the top of the second compartment 222. The filter 230 is disposed between the partition 220 and the drainage opening 240 and comprises filter cartridges or bags 232 (similar in structure and operation to those described above). Slurry/suspension (e.g. with higher water content than that deposited into the unit shown in **Figure 1**) is pumped into the first compartment 210 via the inlet pipe 250, following the slurry flow path 280. As more slurry is pumped into the first compartment 210, the liquid level rises and slurry is therefore through the partition 220. Again, the larger particles are prevented from rising and remain in the first compartment 210. As more slurry is pumped into the first compartment 210, the liquid level continues to rise and passes through the filter 230. The filtered water at the top of the second compartment 222 should now be safe enough to be disposed of into, for example, public drainage systems or the environment. The filtered water continues to rise within the unit 200 until it reaches the height of the drainage opening 240. The water then drains out under gravity following the filtered water flow path 282, where it can then be disposed of on site. This dewatering unit is suited to smaller units in which the sediment in the slurry is finer or contains more liquid. The remaining sediment in the first compartment 210 can then be emptied out and disposed of in an environmentally sensitive manner.

A further opening 285 may be provided at the base of the housing 270, having a removable cap 286. This opening enables any waste that builds up in the lower part of the housing 270 to be drained away or otherwise removed, if required. This can be done on-site, or at another location.

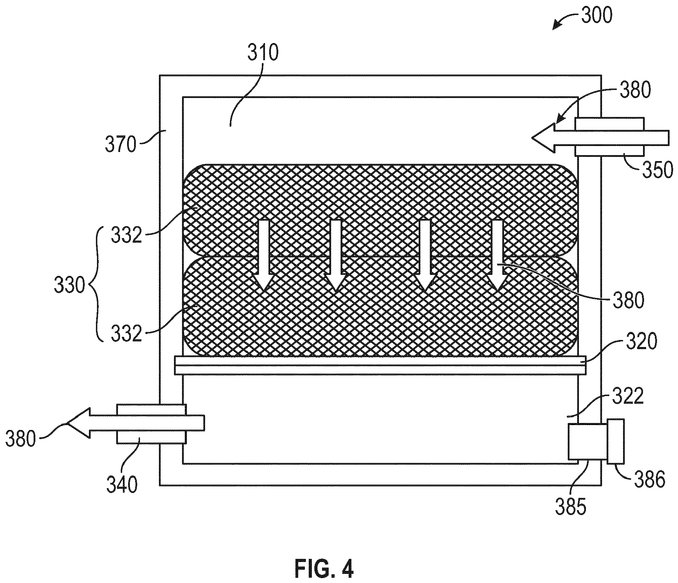

**Figure 4** shows another small dewatering unit 300 comprising a downwards percolating setup. The unit 300 comprises an enclosed housing 370 with a partition 320 extending across the unit to define a first compartment 310 at the top and a second compartment 322 at the bottom.

An inlet pipe 350 feeds into the top of the first compartment 310, and a drainage opening 340 provides an outlet pipe at the bottom of the second compartment 322. The filter 330 is disposed between the partition 320 and the drainage opening 340 and comprises filter cartridges or bags 332 (similar in structure and operation to those described above). Slurry/suspension is pumped into the first compartment 310 via the inlet pipe 350, following the slurry flow path 380 and drains through the partition 320. Again, the larger particles are prevented from rising and remain in the first compartment 310. The slurry drains through the filter 330 and the filtered water at the bottom of the second compartment 322 should now be safe enough to be disposed of into, for example, public drainage systems or the environment via the drainage opening 340 under gravity following the filtered water flow path 382, where it can then be disposed of on site. The remaining sediment in the first compartment 310 can then be emptied out and disposed of in an environmentally sensitive manner.

These units do not, in themselves, require any power in operation, and rely solely upon gravity and/or supply pressure to drain away the filtered water. They are free-standing and require no chemical additives, and the filters can be periodically removed and simply rinsed to remove the trapped sediment and other contaminants.

Uses for these units include but are not limited to road sweeping activities, gully cleaning operations, ground dewatering, excavation dewatering, water transfer activities, drilling/cutting and demolition waste water, transport or machinery waste water, and river restoration activities.

It will be apparent to a person skilled in the art, from the foregoing description that modifications and variations may be made to the described embodiments without departing from the scope of the invention as defined by the appended claims.

## Claims

1. A dewatering unit for filtering waste water from slurries or suspensions, comprising:
a container defining an internal volume, and a partition dividing the internal volume into a first compartment and a second compartment;
wherein
- the first compartment includes an opening for introducing a slurry to be filtered;
- the partition has openings that, in use, allow at least waste water from the slurry to pass from the first compartment to the second compartment while retaining solids in the first compartment;
- the second compartment comprises a drainage opening for allowing liquid to flow from the container, and
- the container defines a housing for a filter, such that in use, when a filter is disposed in the housing, slurry flowing through the partition into the second container flows through the filter before reaching the drainage opening;
wherein the container can be positioned for use above ground at an operation location, and can be moved to another location for further use.

2. A dewatering unit as claimed in claim 1, wherein the partition has openings of a predetermined size and, in use, allows at least waste water from the slurry to pass from the first compartment to the second compartment while retaining solids above the predetermined size in the first compartment; and the second compartment defines the housing for the filter, such that in use, when a filter is disposed in the housing, slurry flowing through the partition into the second container flows through the filter before reaching the drainage opening.

3. A dewatering unit as claimed in claim 1 or 2, wherein the first compartment is open-topped.

4. A dewatering unit as claimed in claim 1, 2, or 3, wherein at least one drainage opening is located at one end of the container, at or near the bottom of the second compartment.

5. A dewatering unit as claimed in claim 1, wherein the container comprises an enclosed housing and has an inlet located in one side at or near a lower end for introduction of the slurry, and the drainage opening is located in an opposite side, at or adjacent an upper end.

6. A dewatering unit as claimed in claim 5, wherein the partition divides the enclosed housing into a lower, first compartment and an upper, second compartment, wherein the upper, second compartment defines the housing for the filter; and optionally wherein the dewatering unit comprises a further outlet in the lower, first compartment through which retained solids can be removed.

7. A dewatering unit as claimed in claim 1, wherein the container comprises an enclosed housing and has an inlet located in one side at or near an upper end for introduction of the slurry, and the drainage opening is located in an opposite side, at or adjacent a lower end; and optionally wherein the partition divides the enclosed housing into an upper, first compartment and a lower, second compartment, wherein the upper, first compartment defines the housing for the filter.

8. A dewatering unit as claimed in any preceding claim, wherein the second container contains a filter comprising at least one porous bag which is optionally sealed for use, or at least one cartridge, optionally having a rigid or flexible porous outer wall, holding filter members in the form of a geosynthetic aggregate; optionally wherein the geosynthetic aggregate comprises plastic beads or expanded polystyrene beads or hollow plastic members

9. A dewatering unit as claimed in any preceding claim, wherein the container comprises an access opening for the second compartment opening to allow the filter to be inserted or removed.

10. A dewatering unit as claimed in any preceding claim, wherein the second compartment includes a retainer for compressing the filter so as to fully fill the flow path to the drainage opening.

11. A dewatering unit as claimed in any preceding claim, wherein the partition comprises a perforated plate, or a mesh plate.

12. A dewatering unit as claimed in any preceding claim, wherein the container further comprises an input pipe for receiving a pumped flow of slurry.

13. A dewatering unit as claimed in any preceding claim, wherein the drainage opening includes a valve or other closure to control flow from the container.

14. A method of operating a dewatering unit as claimed in any preceding claim, comprising:
- positioning the container at ground level at an operation location with a filter in the second compartment;
- introducing slurry/suspension into the first compartment;
- allowing the slurry/suspension to pass through the partition such that solids above a predetermined size are retained in the first compartment;
- filtering the slurry through the filter in the second compartment; and
- allowing filtered water to pass from the container through the outlet; and optionally
- further comprising removing the filters for cleaning and inserting new filters
or cleaned filters and resuming operation.

15. A method as claimed in claim 14, wherein when operations are completed, or when the first compartment is full of retained solids, moving the unit from the operation location to another location at which the retained solids are removed.
